# EUROPÄISCHE PATENTSCHRIFT

(11) **EP 2 176 568 B1**
(45) Veröffentlichungstag und Bekanntmachung des Hinweises auf die Patenterteilung: **18.04.2012**
(21) Anmeldenummer: 08784404.9
(22) Anmeldetag: 06.08.2008
(51) Int. Cl.: F16H 59/08

(54) **BETÄTIGUNGSEINRICHTUNG ZUR AUSWAHL VON SCHALTSTUFEN EINES GANGWECHSELGETRIEBES**
ACTUATING DEVICE FOR SELECTING FIXED GEAR RATIOS OF A GEAR CHANGING TRANSMISSION
DISPOSITIF DE COMMANDE POUR LA SÉLECTION DE RAPPORTS D'UNE BOÎTE DE VITESSES

(30) Priorität: 09.08.2007 DE 102007037707
(43) Veröffentlichungstag der Anmeldung: 21.04.2010
(73) Patentinhaber: ZF Friedrichshafen AG, 88038 Friedrichshafen (DE)
(72) Erfinder: GIEFER, Andreas, 49448 Lemförde (DE); MEYER, Jörg, 49419 Wagenfeld (DE); RAKE, Ludger, 49356 Diepholz (DE)
(86) Internationale Anmeldenummer: PCT/DE2008/050023
(87) Internationale Veröffentlichungsnummer: WO 2009/018823

(56) Entgegenhaltungen:
- WO-A-2006/074645
- DE-A1- 10 217 614
- DE-A1- 19 961 375
- DE-A1-102004 054 264
- JP-A- 5 229 360
- US-A1- 2004 025 613

## Beschreibung

Die Erfindung betrifft eine Betätigungseinrichtung zur Auswahl von Schaltstufen eines Gangwechselgetriebes, beispielsweise eines Automatgetriebes mit shift-by-wire-Betätigung, gemäß dem Oberbegriff des Patentanspruchs 1.

Gangwechselgetriebe von Kraftfahrzeugen werden üblicherweise mittels einer im Griffbereich des Fahrers angeordneten Betätigungseinrichtung gesteuert bzw. geschaltet. Regelmäßig kommen hierzu Betätigungselemente wie Schalthebel oder Wählhebel zum Einsatz, die beispielsweise zwischen den Frontsitzen oder auf der Mittelkonsole des Kraftfahrzeugs angeordnet sind.

Die konstruktiven und ergonomischen Anforderungen an solche Betätigungseinrichtungen für Gangwechselgetriebe sind vielfältig. Um beispielsweise dem Fahrer aus Gründen der Ergonomie ein realistisches Gefühl der Getriebebetätigung zu vermitteln, wird für gattungsgemäße Betätigungseinrichtungen gefordert, dass bei der Betätigung sowohl optische wie auch klare haptische bzw. taktile Rückmeldungen über den aktuellen Schalt- bzw. Betriebszustand des Getriebes vermittelt werden. Insbesondere soll unter möglichst allen Bedingungen eine sichere Bedienbarkeit des der Getriebe-Betätigungseinrichtung gewährleistet sein, auch ohne dabei auf das Betätigungselement blicken zu müssen.

Im Fall der früher üblichen, rein mechanischen Getriebebetätigung bzw. im Fall einer mechanischen Kopplung zwischen Betätigungselement und dem Gangwechselgetriebe - beispielsweise mittels Seilzug oder Gestänge - stimmt dabei die Stellung des Wählhebels bzw. Betätigungselements aufgrund der mechanischen Kopplung zwischen Betätigungselement und Getriebe stets mit der tatsächlichen Getriebestellung überein. Ebenso werden etwaige Betätigungssperren im Getriebe durch die mechanische Übertragung ohne weiteres unmittelbar auch bei der Betätigung des Wählhebels oder Betätigungselements spürbar.

Bei der zunehmend eingesetzten elektrohydraulischen bzw. shift-by-wire-Betätigung von Gangwechselgetrieben existiert jedoch zumeist keine mechanische Kopplung mehr zwischen dem Betätigungselement bzw. Wählhebel in der Fahrgastzelle und dem Kraftfahrzeuggetriebe im Motorraum. Vielmehr erfolgt die Übertragung der Schaltbefehle von der Betätigungseinrichtung zum Kraftfahrzeuggetriebe beim "shift-by-wire"- gesteuerten Getriebe zumeist ausschließlich mittels elektrischer oder elektronischer Signale und anschließender zumeist elektrohydraulischer Umsetzung der Schaltbefehle am Getriebe selbst.

Dies gilt teilweise sowohl für moderne Gangwechselgetriebe, insbesondere jedoch für die aktuellen Generationen der Getriebeautomaten, welche heute zumeist komplett servoaktuatorisch bzw. elektrohydraulisch fernbetätigt werden.

Insbesondere bei shift-by-wire-betätigten Gangwechselgetrieben kommen mit dem Hintergrund der servo-aktuatorischen Getriebebetätigung zunehmend Betätigungseinrichtungen zum Einsatz, die nur noch vergleichsweise kurze Schaltwege aufweisen und geringe Betätigungskräfte erfordern. Dabei beschränkt sich eine haptische Rückmeldung über den erfolgten Schaltvorgang an den Nutzer im Wesentlichen auf die Überwindung der Rastierung des Betätigungselements. Gerade bei derartigen Betätigungseinrichtungen jedoch, die nur noch geringe Schaltwege und Schaltkräfte erfordern, und nur noch eine minimale haptische Rückmeldung über den Schaltvorgang liefern, kann es allerdings zu Fehlbedienungen kommen.

Beispielsweise kann es beim raschen Durchschalten über mehrere im aktuellen Fahrzeugzustand nicht gesperrte Getriebefahrstufen, - beispielsweise beim Hin- und Herschalten zwischen den Fahrstufen "D" und "R", wobei jeweils über die Neutralstellung "N" hinausgeschaltet wird - dazu kommen, dass das Betätigungselement versehentlich über die Fahrstufe "R" hinaus bewegt wird, wodurch unbeabsichtigt die Parksperre eingelegt wird.

Diese Situation kann beispielsweise beim Einparken oder Rangieren mit geringer Geschwindigkeit, oder beim Losschaukeln eines z.B. im Schnee festgefahrenen Fahrzeugs auftreten. In diesen Fällen wird vergleichsweise häufig oder sogar schnell zwischen Vorwärtsgang und Rückwärtsgang hin und her geschaltet, wobei die Aufmerksamkeit gleichzeitig auf die Straßensituation gerichtet ist, weshalb auch die Bedienung des Gangwahlelements rein haptisch ohne Blick auf das Gangwahlelement erfolgt.

Da bei den im Beispielfall geringen Fahrzeuggeschwindigkeiten Rückwärtsgang und Parksperre nicht gesperrt sind, kann es bei Betätigungselementen mit konventionellem Schaltschema-Layout somit zum unbeabsichtigten Überschalten über die Fahrstufe "R" hinaus in die Parksperrenstellung des Betätigungselements kommen. Hierdurch wird jedoch - zumindest bei geringen Geschwindigkeiten - die Parksperre eingelegt und damit der Rangiervorgang unbeabsichtigt und überraschend unterbrochen.

Aus der JP 05 229360 A ist eine Getriebebetätigungseinrichtung mit einem Drehknauf und einem separaten Parksperren-Betätigungselement bekannt, bei dem die Parksperre deaktiviert wird, wenn der Drehknauf aus der Parksperrenstellung heraus bewegt wird. Ferner kann die Parksperre bei diesem Stand der Technik nur eingelegt werden, wenn sich der Drehknauf in der Parksperrenstellung befindet. Ein unbeabsichtigtes einlegen der Parksperre ist bei dieser Betätigungseinrichtung jedoch ebenfalls nicht ausgeschlossen. Zudem muss zum Einlegen der Parksperre sowohl der Drehknauf als auch das Parksperren-Betätigungselement koordiniert betätigt werden, was aufwändig ist und zu Fehlbetätigungen führen kann. Zudem ist diese bekannte Getriebebetätigungseinrichtung nur bedingt für shift-by-wire-geschaltete Getriebe geeignet, da beispielsweise im Fall von Auto-P sowohl der Drehknauf als auch das Parksperren-Betätigungselement aktuatorisch bewegt und so in Übereinstimmung mit dem geänderten Getriebezustand gebracht werden müssten.

Mit diesem Hintergrund ist es Aufgabe der vorliegenden Erfindung, eine Betätigungseinrichtung für die servoaktuatorische Betätigung eines Gangwechselgetriebes zu schaffen, mit der sich die genannten Nachteile des Standes der Technik überwinden lassen. Insbesondere soll die Betätigungseinrichtung unter den verschiedensten Randbedingungen eine stets sichere und haptisch-intuitive Getriebebetätigung erlauben, auch ohne dass dabei das Getriebe-Betätigungselement im Auge behalten werden muss.

Diese Aufgabe wird durch eine Betätigungseinrichtung mit den Merkmalen des Patentanspruchs 1 gelöst.

Bevorzugte Ausführungsformen sind Gegenstand der Unteransprüche. In für sich genommen zunächst einmal bekannter Weise umfasst die Betätigungseinrichtung gemäß der vorliegenden Erfindung ein zwischen zumindest zwei Fahrstufenstellungen und einer Parksperrenstellung bewegbares Gangwahlelement zur Auswahl von Getriebefahrstufen.

Erfindungsgemäß jedoch zeichnet sich die Betätigungseinrichtung durch ein zusätzliches Parksperren-Betätigungselement zur Aktivierung der Parksperre aus. Dabei ist das Gangwahlelement der Betätigungseinrichtung gleichzeitig so eingerichtet, dass die Parksperre gelöst wird, wenn das Gangwahlelement aus der Parksperrenstellung heraus bewegt wird, während im umgekehrten Fall bei Bewegung oder versuchter Bewegung des Gangwahlelements aus einer der Fahrstufenstellungen in die vorherige Parksperrenstellung des Gangwahlelements bzw. über die vorherige Parksperrenstellung des Gangwahlelements hinaus die Parksperre nicht eingelegt wird.

Dies bedeutet mit anderen Worten, dass das Einlegen der Parksperre somit nur noch mittels Betätigung des zusätzlichen Parksperren-Betätigungselements erfolgen kann, nicht jedoch durch Betätigung des Gangwahlelements. Aus diesem Grund ist ein unbeabsichtigtes Einlegen der Parksperre bei der Betätigung des Gangwahlelements vollkommen ausgeschlossen.

Wie gewohnt hingegen kann die etwa eingelegte Parksperre jedoch ganz konventionell gelöst werden, indem das Gangwahlelement aus der am Gangwahlelement nach wie vor vorhandenen Parksperrenstellung heraus in eine der Fahrstufenstellungen bewegt wird.

Auf diese Weise ist ein intuitives Schalten zwischen mehreren Fahrstufenstellungen auch ohne Blick auf das Gangwahlelement gewährleistet, und das beschriebene, beim Stand der Technik mögliche ungewollte Überschalten der gewünschten Fahrstufe mit dem damit verbundenen unbeabsichtigten Einlegen der Parksperre wird vollkommen ausgeschlossen.

Beim Rangieren oder Losschaukeln des Fahrzeugs und dem dazu erforderlichen schnellen Hin- und Her-Schalten zwischen den Fahrstufen "R" und "D" ist es dank der Erfindung also möglich, das Gangwahlelement einfach zwischen seinen beiden Endanschlägen hin und her zu bewegen, ohne dass dabei unbeabsichtigt die Parksperre eingelegt werden kann. Die Aufmerksamkeit des Fahrers kann somit vollständig auf die Straße bzw. auf den Rangiervorgang gerichtet werden, ohne dass das Gangwahlelement im Auge behalten werden muss.

Die Erfindung lässt sich dabei zunächst einmal unabhängig davon verwirklichen, an welcher Position innerhalb des Schaltschemas bzw. Schaltwinkelbereichs der Betätigungseinrichtung die Parksperren-Schaltstellung für das Gangwahlelement angeordnet ist. So könnte die Parksperren-Schaltstellung durchaus an der im Stand der Technik üblichen Position an einem Ende des Schaltschemas, in Nachbarschaft zur Rückwärtsfahrstufe "R" angeordnet sein.

Gemäß einer bevorzugten Ausführungsform der Erfindung ist die Parksperren-Schaltstellung jedoch innerhalb des Schaltwinkelbereichs der übrigen Schaltstellungen des Gangwahlelements angeordnet.

Beispielsweise kann die Parksperrenstellung des Gangwahlelements zwischen zwei Fahrstufenstellungen, insbesondere zwischen den Fahrstufenstellungen "N" und "D" angeordnet sein. Hierdurch ergibt sich zunächst einmal der Vorteil besonders kurzer Schaltwege, um - bei eingelegter Parksperre - aus der Parksperrenstellung heraus wahlweise eine der beiden Fahrstufenstellungen "N" oder "D" zu wählen. Beim Stand der Technik hingegen, bei dem die Parksperrenstellung üblicherweise außerhalb des Bereichs der Fahrstufenstellungen angeordnet ist, muss immer zuerst die Rückwärts-Fahrstufenstellung überschaltet werden, um aus der Parksperrenstellung heraus in die Fahrstufenstellung "N" oder "D" schalten zu können, wodurch sich lange Schaltwege ergeben, die der Ergonomie sowie einer intuitiven Betätigung abträglich sind. Zudem ist es bei einer Anordnung der Parksperren-Schaltstellung innerhalb des Schaltwinkelbereichs der übrigen Schaltstellungen nicht erforderlich, die Parksperren-Schaltstellung aktuatorisch zu sperren, sobald die Parksperre gelöst wurde. Vielmehr genügt es in diesem Fall, die Parksperren-Schaltstellung lediglich logisch aus dem Schaltschema zu eliminieren, sprich eine etwaige Bewegung des Gangwahlelements in die Parksperren-Schaltstellung durch die Steuerelektronik einfach zu ignorieren.

Es ist ferner auch eine Ausführungsform der Erfindung denkbar, bei der die Parksperrenstellung im Schaltschema der Betätigungseinrichtung an derselben Stelle wie eine der weiteren Fahrstufenstellungen angeordnet ist. Mit anderen Worten bedeutet dies, dass eine der Fahrstufenstellungen im Schaltschema logisch doppelt belegt ist. Damit wird - bei eingelegter Parksperre - an der entsprechenden Position des Schaltschemas nicht eine Fahrstufenstellung, sondern die Parksperrenstellung signalisiert. Ob in diesem Fall die Parksperre eingelegt ist, oder ob die an derselben Stelle im Schaltschema angeordnete Fahrstufe eingelegt ist, wird jeweils eindeutig durch die Fahrstufenanzeige symbolisiert. In diesem Fall kann bei eingelegter Parksperre mittels des Gangwahlelements somit direkt aus der Parksperre heraus entweder die Fahrstufe "R" oder die Fahrstufe "D" angewählt werden. Wird aus "R" oder "D" zurück in die vorherige Parksperrenstellung geschaltet, so wird nicht die Parksperre eingelegt und an der Ganganzeige visualisiert, sondern vielmehr die Neutralstellung "N".

Die Erfindung lässt sich prinzipiell bei allen üblichen Bauformen von Betätigungseinrichtungen bzw. Gangwahlelementen verwirklichen. Mit diesem Hintergrund ist es gemäß einer Ausführungsform der Erfindung zunächst einmal vorgesehen, dass das Gangwahlelement der Betätigungseinrichtung definiert-multistabil ausgelegt ist.

Dank dieser Ausführungsform lässt sich die Erfindung prinzipiell auch bei einem im Wesentlichen konventionellen Gangwahlelement mit mehreren stabilen Rastpositionen verwirklichen, bei dem jeder der stabilen Rastpositionen eine Fahrstufe definiert zugeordnet ist. Dies ist beispielsweise bei einem konventionellen Automatikwählhebel der Fall.

Um zu verdeutlichen, dass die Parksperre erfindungsgemäß nicht mehr mittels Bewegung des Wählhebels in die Parksperrenstellung (sondern nur durch das zusätzliche Parksperren-Betätigungselement) eingelegt werden kann, ist in diesem Fall die Ganganzeige am Wählhebel vorzugsweise so auszulegen, dass die Anzeigeposition "Parksperre" bei gelöster Parksperre ausgeblendet wird. Ebenso ist bei dieser Applikation der Erfindung auf einen konventionellen, definiert-multistabilen Wählhebel vorzugsweise eine Aktuatoreinrichtung vorzusehen, die den Wählhebel beim Einlegen der Parksperre aktuatorisch in die Parksperrenstellung bewegt, damit auch bei eingelegter Parksperre - sei es manuell oder automatisch per Auto-P - die Position des Wählhebels mit der im Getriebe tatsächlich eingelegten Fahrstufe wieder übereinstimmt. Wahlweise kann jedoch die Parksperrenstellung des Wählhebels wie oben beschrieben auch doppelt belegt sein, beispielsweise mit Neutralstellung und Rückwärtsfahrstufe.

Gemäß einer alternativen Ausführungsform der Erfindung ist das Gangwahlelement der Betätigungseinrichtung monostabil ausgelegt. Ein monostabil ausgelegtes Gangwahlelement, beispielsweise ein Automatik-Wählhebel, der federbelastet nach jeder Betätigung in die Mittelstellung zurückkehrt, hat zunächst einmal den Vorteil, dass keine Aktuatoreinrichtungen notwendig sind, um die Wählhebelstellung fallweise aktuatorisch wieder in Übereinstimmung mit der tatsächlich eingelegten Fahrstufe zu bringen. Letzteres ist im Fall eines definiert-multistabilen Gangwahlelements - also beispielsweise beim konventionellen Wählhebel - insbesondere beim automatischen Einlegen der Parksperre mittels Auto-P notwendig, damit die Wählhebelstellung auch im Fall von Auto-P wieder mit dem Getriebezustand übereinstimmt.

Bei einem monostabilen Gangwahlelement muss bei selbsttätigen Veränderungen des Getriebezustands jedoch lediglich die Ganganzeige am Wählhebel oder im Armaturenbrett entsprechend nachgeführt bzw. umgestellt werden, um Getriebezustand und Betätigungseinrichtung wieder in Übereinstimmung zu bringen. Aus diesem Grund sind Betätigungseinrichtungen mit monostabil ausgelegtem Gangwahlelement zunächst einmal auch prädestiniert für den Einsatz in Verbindung mit der vorliegenden Erfindung. Denn die bei monostabilen Gangwahlelementen oder Wählhebeln ohnehin vorhandene bzw. erforderliche variable Anzeige der Getriebeschaltstufen am Wählhebel oder im Armaturenbrett kann in diesem Fall ohne weiteres so gestaltet werden, dass die zur Parksperrenstellung gehörige Anzeigeposition aus dem Schaltschema eliminiert bzw. ausgeblendet wird, sobald die Parksperre mittels Betätigung des Gangwahlelements bzw. Wählhebels gelöst wurde.

Wird andererseits die Parksperre durch Betätigung des erfindungsgemäßen zusätzlichen Parksperren-Betätigungselements - oder etwa automatisch mittels Auto-P-Funktion - wieder eingelegt, so kann die Ganganzeige der Betätigungseinrichtung ebenso ohne weiteres wieder so angesteuert werden, dass die zur Parksperrenstellung gehörige Anzeigeposition im Schaltschema wieder aktiviert und eingeblendet wird. Zusätzlich kann bei einem monostabilen Gangwahlelement oder Wählhebel - in für sich genommen bekannter Weise - auch ein aktuatorisch einstellbarer Endanschlag vorgesehen sein, um je nach eingelegter Fahrstufe und in Abhängigkeit weiterer Zustandsfaktoren am Kraftfahrzeug (Zündung eingeschaltet, Motor läuft, Fahrzeuggeschwindigkeit etc.) den Betätigungsbereich des Wählhebels einzuschränken, damit die Auswahl momentan nicht zulässiger Fahrstufen nicht nur unterbunden, sondern dem Fahrer am Betätigungselement auch haptisch signalisiert wird.

Gemäß einer weiteren, besonders bevorzugten Ausführungsform der Erfindung ist das Gangwahlelement der Betätigungseinrichtung indifferent-multistabil ausgelegt, dabei vorzugsweise als für sich genommen unbegrenzt rotierbarer Drehknopf ausgebildet.

Ein indifferent-multistabiles Gangwahlelement - also beispielsweise ein rotationssymmetrischer Drehknopf ohne Positionszeiger - unterscheidet sich von einem monostabilen Gangwahlelement - also beispielsweise von einem Automatik-Wählhebel, der federbelastet nach jeder Betätigung in die Mittelstellung zurückkehrt - zunächst einmal dadurch, dass das indifferent-multistabile Gangwahlelement nicht in eine bestimmte stabile Position zurückkehrt. Vielmehr bleibt das indifferent-multistabile Gangwahlelement jeweils in derjenigen Position, in die es bei der Betätigung verbracht wurde, zunächst ebenso wie ein definiert-multistabiles Gangwahlelement, also wie beispielsweise ein konventioneller Wählhebel oder auch ein Drehknopf mit Positionszeiger.

Vom definiert-multistabilen Gangwahlelement (also beispielsweise vom konventionellen Wählhebel) unterscheidet sich das indifferent-multistabile Gangwahlelement hingegen noch dadurch, dass den einzelnen Stellungen des indifferent-multistabilen Gangwahlelements nicht von vorneherein eine definierte Schaltstellung oder Fahrstufe zugeordnet ist.

Ein wichtiges Anwendungsbeispiel eines indifferent-multistabilen Gangwahlelements ist der bereits genannte, im Wesentlichen rotationssymmetrische Drehknopf ohne Positionszeiger. Bei einem derartigen Drehknopf als Gangwahlelement zur Steuerung eines Gangwechselgetriebes ist dabei zunächst einmal keiner der Winkelstellungen des Drehknopfs eine bestimmte Schaltstellung oder Fahrstufe zugeordnet. Vielmehr ergibt sich die bei der Betätigung des Drehknopfes um einen bestimmten Drehwinkel erreichte Schaltstellung bzw. Fahrstufe stets nur im Zusammenhang mit der bzw. als Differenz zur bereits zuvor eingelegten Schaltstellung oder Fahrstufe, sowie im Zusammenhang mit einer beim indifferent-multistabilen Gangwahlelement stets erforderlichen aktiven Ganganzeige.

Dabei hat das indifferent-multistabile Betätigungselement - wie beispielsweise der genannte Drehknopf - den entscheidenden Vorteil, dass hiermit ein Gangwahlelement mit diskreten und stabilen Schaltstufen verwirklicht werden kann, wobei jedoch im Unterschied zum definiert-multistabilen Betätigungselement (z.B. konventioneller Wählhebel) eine aktuatorische Nachführung des Gangwahlelements im Fall einer nicht durch das Gangwahlelement ausgelösten Veränderung des System- bzw. Getriebezustands nicht erforderlich ist. Bei dem genannten Drehknopf als Anwendungsbeispiel für ein indifferent-multistabiles Betätigungselement ist vielmehr lediglich die Anzeige des Schaltzustands (und ggf. die Rastierung bzw. der Endanschlag) nachzuführen, um jederzeit Übereinstimmung zwischen Getriebezustand und Schaltstellung des Gangwahlelements aufrechtzuerhalten bzw. herzustellen.

Mit diesem Hintergrund ist es gemäß einer weiteren bevorzugten Ausführungsform der Erfindung vorgesehen, dass die Betätigungseinrichtung eine aktuatorisch verstellbare Anschlageinrichtung zur Begrenzung des Drehwinkels des Drehknopfs aufweist.

Auf diese Weise kann mittels Einsatz eines zeigerlosen Drehknopfs vollständig die Funktion und Bedienungsweise eines herkömmlichen, multistabilen Bedienelements wie beispielsweise eines Knebelschalters oder Wählhebels nachgebildet werden, bei dem jeder Schaltposition unveränderlich ein definierter Betriebszustand des zu steuernden Systems zugeordnet ist, und bei dem in beiden Dreh- bzw. Schaltrichtungen sowohl optisch als auch mechanisch definierte Schaltendstellungen bzw. Endanschläge vorhanden sind.

Um dies zu verwirklichen, wird bei dieser Ausführungsform der Erfindung mittels der aktuatorisch verstellbaren Anschlageinrichtung ein variabler Endanschlag für den Drehknopf in vorzugsweise beiden Drehrichtungen realisiert. Dies bedeutet, dass der Endanschlag bzw. die beiden Endanschläge - unabhängig von der absoluten Rotationswinkelstellung des Drehknopfs - stets aktuatorisch so gesetzt bzw. positioniert werden können, wie dies mit der gegenwärtigen logischen Schaltposition des Drehknopfs korrespondiert.

Beispielsweise könnte der Drehknopf vom Bediener zuletzt in der Schaltposition "D" belassen worden sein, wonach das Fahrzeug jedoch verlassen wurde, weshalb das Fahrzeug per Auto-P selbsttätig die Parksperre eingelegt habe. Dank der aktuatorisch positionierbaren Endanschläge zur Drehwinkelbegrenzung des Drehknopfs können die Endanschläge des Drehknopfs in diesem Fall aktuatorisch neu so gesetzt werden, dass sich für den Fahrer bei der nächsten Betätigung des Drehknopfs der mit der eingelegten Parksperre übereinstimmende, neue Drehwinkelbereich bis zu den Endanschlägen des Drehknopfs ergibt.

Dank dieser Ausführungsform wird dem Nutzer somit - anhand der spürbaren Endanschläge - eine stets intuitive Schaltbetätigung ermöglicht, auch ohne auf den Drehknopf blicken zu müssen.

Mittels der aktuatorisch verstellbaren Endanschläge lässt sich zudem die Drehbewegung des Drehknopfes auch komplett blockieren, so dass hiermit insbesondere auch Sicherheitsfunktionen wie die Shiftlock-Sperre nachgebildet werden können. Hierbei ist der Drehknopf mittels der aktuatorisch verstellbaren Endanschläge so lange blockiert - beispielsweise in der Parksperrenstellung oder in der Neutralstellung - bis der Fahrer das Bremspedal betätigt und somit die Shiftlock-Sperre aufhebt.

Derartige aktuatorisch variable Endanschläge für einen Drehknopf sind für sich genommen aus dem Stand der Technik bekannt - insbesondere aus der Patentschrift DE 10 2005 002 086 B3 der Anmelderin, deren Offenbarungsgehalt hiermit übernommen wird - und werden daher nicht nochmals eigens in ihrem konstruktiven Aufbau beschrieben.

Insgesamt wird die Erfindung zunächst einmal unabhängig davon verwirklicht, wo das zusätzliche Parksperren-Betätigungselement angeordnet ist. Beispielsweise kann das zusätzliche Parksperren-Betätigungselement auf dem Armaturenbrett oder in der Mittelkonsole angeordnet sein, beispielsweise in logischem Zusammenhang oder in der Nähe des Betätigungselements für eine Feststellbremse.

Gemäß einer bevorzugten Ausführungsform der Erfindung ist jedoch vorgesehen, dass das zusätzliche Parksperren-Betätigungselement mittig auf der Stirnseite des Drehknopfs der Getriebebetätigungseinrichtung angeordnet ist. Auf diese Weise wird der dem Nutzer vertraute Zusammenhang zwischen Gangwahlelement und Parksperrenbetätigung gewahrt, und dennoch die erfindungsgemäße, logische Ausgliederung der Parksperrenposition aus dem Schaltschema am Gangwahlelement verdeutlicht.

Eine weitere Ausführungsform der Erfindung schließlich sieht vor, dass das zusätzliche Parksperren-Betätigungselement ferner zur aktuatorischen Betätigung einer Feststellbremse eingerichtet ist. Auf diese Weise ergibt sich eine vorteilhafte Funktionsintegration von Parksperre und Feststellbremse, und damit ein zusätzlicher Beitrag zu Sicherheit und Bedienkomfort. Bei jedem Einlegen der Parksperre kann so automatisch gleichzeitig die Feststellbremse betätigt werden, womit das Fahrzeug vollständig gegen Wegrollen gesichert ist. Der üblicherweise beim Abstellen des Fahrzeugs zusätzlich erforderliche Griff nach der Handbremse bzw. nach dem Betätigungselement für die Feststellbremse kann somit entfallen.

Die Erfindung betrifft auch eine Betätigungseinrichtung zur Auswahl von Schaltstufen eines Gangwechselgetriebes mit einem, zwischen zumindest zwei Fahrstufenstellungen bewegbarem Gangwahlelement und einer Ganganzeigeanordnung zur Anzeige der gewählten Fahrstufe. Die Betätigungseinrichtung weist dabei ein vom Gangwahlelement unabhängig lageveränderbares Parksperren-Betätigungselement zur Aktivierung der Parksperre auf, wobei das Gangwahlelement derart eingerichtet ist, dass eine Lageänderung desselben bei eingelegter Parksperre zur Ausgabe eines Schaltbefehls zur Deaktivierung der Parksperre führt.

In bevorzugter Ausführung der Erfindung ist der Parksperre eine Parksperrenanzeige zugeordnet und in die Ganganzeigeanordnung integriert.

Bei dem Gangwahlelement handelt es sich bevorzugt um einen Drehschalter. Der Drehschalter kann über die in der Ganganzeigeanordnung festgelegten Gangwahlpositionen hinaus in diskrete Rastpositionen drehbar sein. Alternativ hierzu besteht auch die Möglichkeit, dass der Drehschalter über eine begrenzte Anzahl von Rastpositionen verfügt und durch Anschläge in seiner Drehbewegung begrenzt ist.

In weiterer Ausführung der Erfindung ist die Parksperrenanzeige in die Ganganzeigeanordnung zwischen den Positionen "N" und "D" eingefügt. Die Parksperrenanzeige kann in zweckmäßiger Ausgestaltung der Erfindung die Erreichbarkeit möglicher Gangwahlpositionen anzeigen.

Weiterhin besteht in Ausgestaltung der Erfindung die Möglichkeit, das Parksperren-Betätigungselement in, an oder auf dem Gangwahlelement anzuordnen.

Im Folgenden wird die Erfindung anhand lediglich Ausführungsbeispiele darstellender Zeichnungen näher erläutert. Dabei zeigt:
- **Fig. 1**: in schematischer isometrischer Darstellung eine Betätigungseinrichtung für einen Getriebeautomaten gemäß dem Stand der Technik;
- **Fig. 2**: in einer schematischen Darstellung eine Ausführungsform einer Betätigungseinrichtung gemäß der vorliegenden Erfindung in der Draufsicht;
- **Fig. 3**: in einer **Fig. 2** entsprechenden Darstellung und Ansicht die Betätigungseinrichtung gemäß **Fig. 2** während des Schaltens aus der Parksperrenstellung heraus in die Fahrstufenstellung "D";
- **Fig. 4**: in einer **Fig. 2** und **3** entsprechenden Darstellung und Ansicht die Betätigungseinrichtung gemäß **Fig. 2** und **3**, nach dem Schalten in die Fahrstufenstellung "D";
- **Fig. 5**: in einer **Fig. 2** bis **4** entsprechenden Darstellung und Ansicht die Betätigungseinrichtung gemäß **Fig. 2** bis **4**, während des Schaltens aus der Parksperrenstellung heraus in die Neutralstellung "N";
- **Fig. 6**: in einer **Fig. 2** bis **5** entsprechenden Darstellung und Ansicht die Betätigungseinrichtung gemäß **Fig. 2** bis **5**, nach dem Schalten in die Neutralstellung "N";
- **Fig. 7**: in einer **Fig. 2** bis **6** entsprechenden Darstellung und Ansicht die Betätigungseinrichtung gemäß **Fig. 2** bis **6**, während des Schaltens aus der Parksperrenstellung heraus in die Fahrstufenstellung "R";
- **Fig. 8**: in einer **Fig. 2** bis **7** entsprechenden Darstellung und Ansicht die Betätigungseinrichtung gemäß **Fig. 2** bis **7**, nach dem Schalten in die Fahrstufenstellung "R";
- **Fig. 9**: in einer **Fig. 2** bis **8** entsprechenden Darstellung und Ansicht die Betätigungseinrichtung gemäß **Fig. 2** bis **8**, bevor aus der Parksperrenstellung heraus in die Fahrstufenstellung "D" geschaltet wird;
- **Fig. 10**: in einer **Fig. 2** bis **9** entsprechenden Darstellung und Ansicht die Betätigungseinrichtung gemäß **Fig. 2** bis **9**, nach dem Schalten aus der Parksperrenstellung in die Fahrstufenstellung "D"; und
- **Fig. 11**: in einer **Fig. 2** bis **10** entsprechenden Darstellung und Ansicht die Betätigungseinrichtung gemäß **Fig. 2** bis **10**, während des Schaltens aus der Fahrstufenstellung "D" in die Fahrstufenstellung "N".

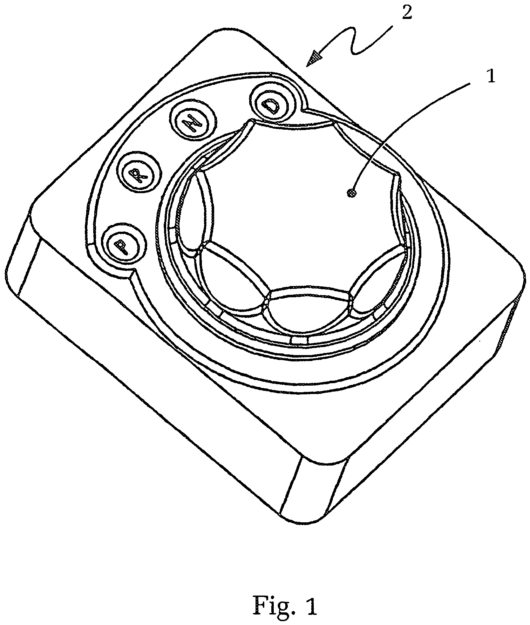

In Fig. 1 ist in schematischer isometrischer Darstellung eine Betätigungseinrichtung für ein aktuatorisch gesteuertes Automatikgetriebe eines Kraftfahrzeuges dargestellt. Diese beispielsweise auf der Mittelkonsole des Kraftfahrzeugs anordenbare Betätigungseinrichtung weist einen zeigerlosen, im Wesentlichen rotationssymmetrischen Drehknopf 1 sowie eine Ganganzeigeanordnung 2 zur Visualisierung der eingelegten Fahrstufe auf. Der Drehknopf 1 ist dabei als für sich genommen unbegrenzt rotierbares, indifferent-multistabil ausgelegtes Gangwahlelement ausgebildet.

Dies bedeutet, dass zwischen der Rotationswinkelstellung des Drehknopfs 1 und dem Schaltzustand des Automatikgetriebes bzw. der im Getriebe eingelegten Fahrstufe zunächst einmal keinerlei festgelegter Zusammenhang besteht. Vielmehr wird der Zusammenhang zwischen der Rotationswinkelstellung des Drehknopfs 1 und dem Schaltzustand im Automatikgetriebe erst durch die Steuerelektronik der Betätigungseinrichtung hergestellt, indem die Ganganzeigeanordnung 2 in logischer Übereinstimmung mit der jeweiligen Betätigung des Drehknopfs 1 sowie mit dem aktuellen Schaltzustand des Automatikgetriebes angesteuert wird.

Zusätzlich enthält die Betätigungseinrichtung gemäß Fig. 1 aktuatorisch ansteuerbare Endanschläge zur veränderlichen Begrenzung des zur Verfügung stehenden Rotationswinkels des Drehknopfs 1. Mittels der veränderbaren Endanschläge lässt sich sicherstellen, dass der Drehknopf - unabhängig von seiner absoluten Drehwinkelstellung - jeweils nur soweit gedreht werden kann, wie dies der aktuell auf der Ganganzeigeanordnung 2 angezeigten und zugleich tatsächlich im Getriebe eingelegten bzw. zulässigen Fahrstufe entspricht.

Mit anderen Worten bedeutet dies, dass die Endanschläge des Drehknopfs 1 bei Veränderungen des Systemzustands bzw. bei einer Änderung der im Getriebe eingelegten Fahrstufe (unabhängig davon, ob die Veränderungen vom Fahrer hervorgerufen wurden oder automatisch erfolgt sind, beispielsweise mittels Auto-P) von der Steuerelektronik der Betätigungseinrichtung jeweils neu so gesetzt werden können, dass der Drehknopf auch im neuen Systemzustand jeweils wieder nur innerhalb des momentan zulässigen Fahrstufenbereichs hin und her gedreht werden kann.

Die dargestellte Betätigungseinrichtung gemäß Fig. 1 weist jedoch die eingangs beschriebenen Nachteile des Standes der Technik auf. So kann es insbesondere beim raschen Hin- und Herschalten zwischen der Vorwärtsfahrstufe "D" und der Rückwärtsfahrstufe "R" - während gleichzeitig die Aufmerksamkeit des Fahrers auf die Straße gerichtet ist - dazu kommen, dass unbeabsichtigt über die Rückwärtsfahrstufe "R" hinaus geschaltet und somit versehentlich die Parksperre aktiviert wird.

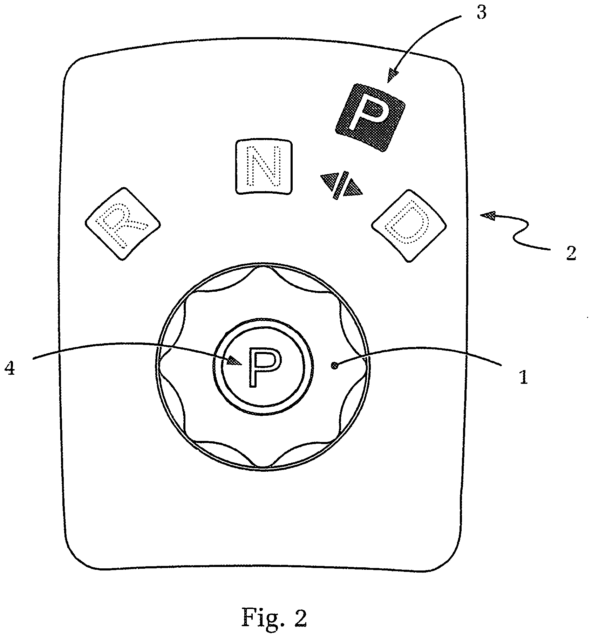

Hierdurch wird das aktuelle Rangiermanöver jedoch unerwartet unterbrochen und das Fahrzeug für den Fahrer überraschend zum Stillstand gebracht, was unerwünscht ist. Im Unterschied hierzu zeigt Fig. 2 in einer schematischen Draufsicht eine Betätigungseinrichtung gemäß einer Ausführungsform der vorliegenden Erfindung.

Auch die Betätigungseinrichtung gemäß Fig. 2 weist zunächst einmal einen zeigerlosen Drehknopf 1 und eine Ganganzeigeanordnung 2 auf. Ebenso wie die Betätigungseinrichtung aus dem Stand der Technik gemäß Fig. 1 ist der Drehknopf der erfindungsgemäßen Betätigungseinrichtung gemäß Fig. 2 als für sich genommen unbegrenzt rotierbares Gangwahlelement ausgebildet. Daher stellt auch die Betätigungseinrichtung gemäß Fig. 2 wieder ein indifferent-multistabiles Gangwahlelement dar, das mehrere stabile, für sich genommen jedoch nicht bestimmten Getriebezuständen zugeordnete Absolutwinkelstellungen des Gangwahlelements aufweist.

Die am Drehknopf 1 gemäß der Darstellung in Fig. 2 angeordneten Griffmulden stellen lediglich ein mögliches Ausführungsbeispiel dar und sollen die Funktion des Drehknopfs 1 als Betätigungselement verdeutlichen. Ebenso gut kann der Drehknopf 1 jedoch auch komplett rotationssymmetrisch bzw. rund und lediglich mit einem griffigen Rändel oder einer Gummierung versehen sein, wodurch dem Bediener besonders klar verdeutlicht wird, dass einer bestimmten Absolutwinkelstellung des Drehknopfs 1 für sich genommen keine bestimmte Gangposition oder Schaltstufe zugeordnet ist.

Im Unterschied zu der aus dem Stand der Technik bekannten Betätigungseinrichtung gemäß Fig. 1 ist bei der erfindungsgemäßen Betätigungseinrichtung gemäß Fig. 2 jedoch die Parksperrenposition aus dem Schaltschema und aus der Ganganzeigeanordnung 2 ausgegliedert.

Zwar ist im Schaltschema und im Rahmen der Ganganzeigeanordnung 2 nach wie vor eine Leuchtanzeige 3 zur Signalisierung der eingelegten Parksperre vorgesehen. Die Leuchtanzeige 3 dient jedoch lediglich noch der Visualisierung der Parksperre, wenn diese tatsächlich eingelegt ist. Hingegen kann die Parksperre - ist sie einmal gelöst - nicht mehr durch Drehen des Drehknopfs 1 zurück in die vorherige Parksperrenstellung wieder aktiviert werden. Das Einlegen der Parksperre kann vielmehr ausschließlich durch den bei dieser Ausführungsform mittig im Drehknopf 1 angeordneten, zusätzlichen Betätigungsknopf 4 erfolgen.

Mit anderen Worten bedeutet dies, dass - sobald die Parksperre gelöst ist - die gewünschten Fahrstufen mittels des Drehknopfs 1 sehr einfach und intuitiv durch Drehen des Drehknopfs 1 zwischen den beispielsweise bei den Stellungen "R" und "D" gesetzten Endanschlägen des Drehknopfs 1 gewählt werden können, ohne dass dabei die Gefahr des unerwünschten Überschaltens in die Parksperrenstellung besteht.

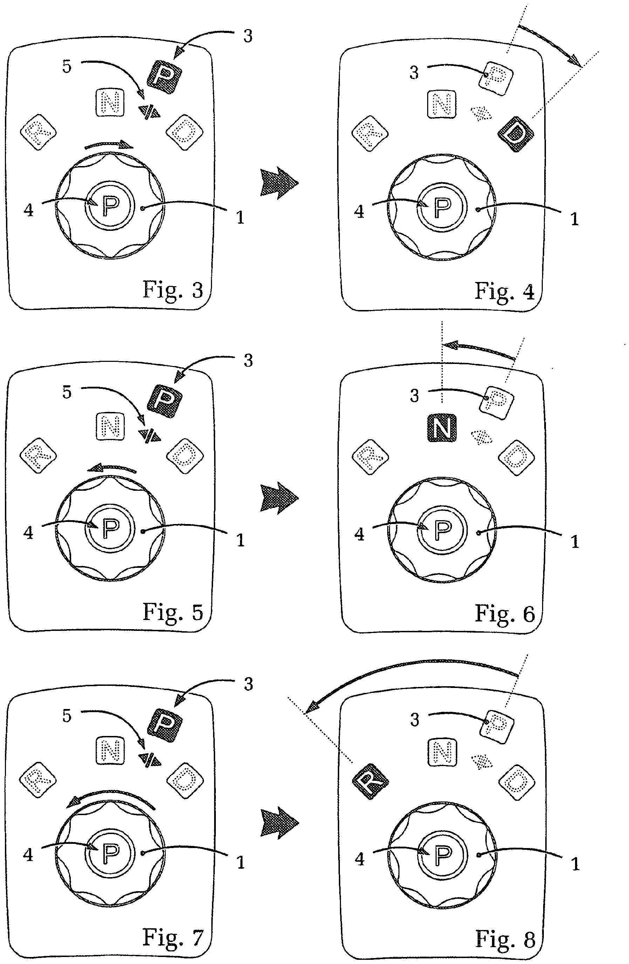

Soll schließlich die Parksperre wieder aktiviert werden, so erfolgt dies völlig unabhängig von der gerade eingelegten Getriebefahrstufe sowie unabhängig von der Rotationswinkelstellung des Drehknopfs 1 einfach durch Drücken des zusätzlichen Parksperren-Betätigungsknopfs 4. Hierdurch wird (falls im aktuellen Fahrzeugzustand, insbesondere bei der aktuellen Fahrzeuggeschwindigkeit zulässig) sowohl im Getriebe die Parksperre eingelegt, als auch die entsprechende Leuchtanzeige 3 auf der Betätigungseinrichtung gemäß Fig. 2 wieder aktiviert. In den Fig. 3 bis 8 sind mögliche Betätigungsabläufe dargestellt, wie sie sich beim Einsatz der erfindungsgemäßen Betätigungseinrichtung gemäß Fig. 2 ergeben.

Dabei zeigen Fig. 3 und 4 den Zustand der Betätigungseinrichtung beim bzw. nach dem Schalten aus der Parksperrenposition in die Fahrstufe "D", Fig. 5 und 6 den Zustand der Betätigungseinrichtung beim bzw. nach dem Schalten aus der Parksperrenposition in die Neutralstellung "N", und Fig. 7 und 8 den Zustand der Betätigungseinrichtung beim bzw. nach dem Schalten aus der Parksperrenposition in die Fahrstufe "R".

Anhand der Fig. 3, 5 und 7 erkennt man, dass bei eingelegter Parksperre lediglich die Leuchtanzeige 3 für die Parksperre aktiviert bzw. erleuchtet ist, während die anderen Leuchtanzeigen für "R", "N" und "D" deaktiviert bzw. gedimmt sind.

Hierdurch wird dem Fahrer zunächst einmal die eingelegte Parksperre deutlich signalisiert. Zusätzlich wird bei eingelegter Parksperre und entsprechend aktivierter Leuchtanzeige 3 ein Doppelpfeilsymbol 5 angezeigt, wodurch dem Fahrer verdeutlicht wird, dass der Drehknopf 1 zum Lösen der Parksperre und zum Schalten in eine der Fahrstufen wahlweise nach links oder rechts gedreht werden kann, was durch den in den Fig. 3, 5 und 7 in der Nähe des Drehknopfs 1 hinzugefügten (an der Betätigungseinrichtung nicht vorhandenen) Richtungspfeil symbolisiert sein soll. Der Fahrer kann somit bei getretenem Bremspedal (Shiftlockfunktion) ausgehend von der Schaltposition "P" die Schaltpositionen "D", "N" oder "R" anwählen.

Das Resultat der hierzu erforderlichen Drehbetätigung des Drehknopfs 1 gemäß Fig. 3, 5 bzw. 7 ist in den Fig. 4, 6 bzw. 8 dargestellt. Man erkennt, dass nach erfolgter Betätigung des Drehknopfs 1 und der damit verbundenen Einlegung der entsprechenden Fahrstufe "D", "N" oder "R" die Parksperren-Leuchtanzeige 3 sowie der Doppelpfeil 5 deaktiviert und stattdessen die mit der jeweils eingelegten Fahrstufe korrespondierende Leuchtanzeige aktiviert wird.

Die Deaktivierung der Parksperren-Leuchtanzeige 3 geht dabei einher mit einer Eliminierung der Schaltposition "P" sowohl aus dem per Leuchtanzeige 2 visualisierten Schaltschema als auch aus dem logischen Schaltschema der Betätigungseinrichtung.

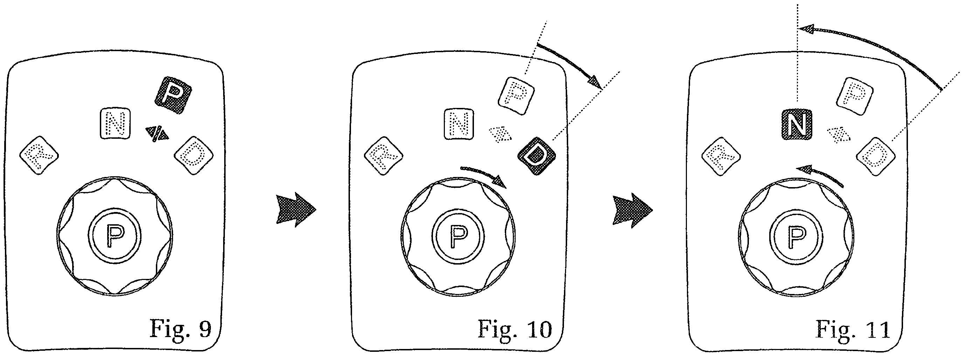

Die Fig. 9 bis 11 schließlich zeigen zunächst nochmals den Ablauf beim Schalten aus "P" nach "D" (ähnlich wie bereits in Fig. 3 und 4 dargestellt) mit anschließender Schaltbetätigung aus "D" nach "N". Anfangs befinde sich das Getriebe und die Betätigungseinrichtung im Schaltzustand "P", und die entsprechende Parksperren-Leuchtanzeige sei aktiviert (Fig. 9).

Anschließend betätigt der Fahrer den Drehknopf und dreht ihn um eine Raststellung im Uhrzeigersinn, vgl. Fig. 10. Dabei wird die Parksperre im Getriebe gelöst, das Getriebe in die Fahrstufe "D" geschaltet, die Parksperren-Leuchtanzeige "P" ausgeschaltet und stattdessen die Leuchtanzeige der Fahrstufe "D" aktiviert.

Betätigt der Fahrer nunmehr erneut den Drehknopf, und dreht ihn um eine Raststellung gegen den Uhrzeigersinn, vgl. Fig. 11, so wird hierdurch nicht mehr die Parksperrenstellung eingelegt, die zuvor gemäß Fig. 9 noch dieser Rotationswinkelstellung des Drehknopfs entsprochen hätte. Vielmehr wird durch diese Drehbetätigung des Drehknopfs aus "D" um eine Raststellung gegen den Uhrzeigersinn nun anstelle der Parksperrenstellung unmittelbar die Neutralstellung "N" eingelegt, da erfindungsgemäß die Parksperrenstellung nach der Deaktivierung der Parksperre aus dem Betätigungsschema eliminiert wurde.

Der Drehknopf weist - bei eingelegter Parksperre - somit anfänglich die vier stabilen Schaltpositionen "P", "R", "N" und "D" auf, die durch entsprechendes Verdrehen des Drehknopfs 1 nach links oder rechts um eine bzw. zwei Positionen angewählt werden können. Hierbei werden die Endanschläge des Drehknopfs in den Schaltpositionen "R" und "D" jeweils durch aktuatorisch gesetzte Sperreinrichtungen gebildet.

Nach der Deaktivierung der Parksperre und nach dem ersten Einlegen einer der Fahrstufen "R", "N" oder "D" hingegen wird die Schaltposition "P" aus dem Schaltschema eliminiert, wonach mittels Verdrehen des Drehknopfs 1 nur noch die drei stabilen Positionen "R", "N" oder "D" angewählt werden können. Das Wiedereinlegen der Parksperre ist damit nur noch mittels Betätigung der zentralen "P"-Taste (bzw. beim Abstellen des Fahrzeugs ggf. automatisch mittels Auto-P) möglich.

Im Ergebnis wird damit deutlich, dass mit der Erfindung eine Betätigungseinrichtung geschaffen wird, die gegenüber dem Stand der Technik insbesondere den Vorteil des sicheren und intuitiven Schaltens zwischen den unterschiedlichen Fahrstufenstellungen auch ohne Blick auf das Gangwahlelement aufweist. Das beim Stand der Technik mögliche Überschalten der gewünschten Fahrstufe und das unbeabsichtigte Einlegen der Parksperre wird dank der Erfindung ausgeschlossen. Die Aufmerksamkeit des Fahrers kann somit permanent auf die Straße gerichtet bleiben, ohne dass das Gangwahlelement im Auge behalten werden müssen.

Damit leistet die Erfindung im Gebiet der Betätigungseinrichtungen für Kraftfahrzeuggetriebe einen entscheidenden Beitrag zur Verbesserung von Ergonomie und Bedienkomfort.

### Bezugszeichenliste

- 1: Gangwahlelement, Drehknopf
- 2: Ganganzeigeanordnung
- 3: Parksperrenanzeige
- 4: Parksperrentaste
- 5: Doppelpfeil

## Patentansprüche

1. Betätigungseinrichtung zur Auswahl von Schaltstufen eines Gangwechselgetriebes mit einem zwischen zumindest zwei Fahrstufenstellungen bewegbaren Gangwahlelement (1) und einer Ganganzeigeanordnung (2) zur Anzeige der gewählten Fahrstufe, wobei das Gangwahlelement (1) ein Drehschalter ist, **dadurch gekennzeichnet, dass** die Betätigungseinrichtung ein vom Gangwahlelement (1) unabhängig lageveränderbares Parksperren-Betätigungselement (4) zur Aktivierung der Parksperre unabhängig von der gerade eingelegten Getriebefahrstufe sowie unabhängig von der Rotationswinkelstellung des Gangwahlelements (1) aufweist, wobei das Gangwahlelement (1) bei Lageänderung desselben bei eingelegter Parksperre einen Schaltbefehl zur Deaktivierung der Parksperre ausgibt.

2. Betätigungseinrichtung nach Anspruch 1, **dadurch gekennzeichnet, dass** das Gangwahlelement (1) der Betätigungseinrichtung definiert-multistabil ausgelegt ist.

3. Betätigungseinrichtung nach Anspruch 1, **dadurch gekennzeichnet, dass** das Gangwahlelement (1) der Betätigungseinrichtung monostabil ausgelegt ist.

4. Betätigungseinrichtung nach Anspruch 1, **dadurch gekennzeichnet, dass** das Gangwahlelement (1) der Betätigungseinrichtung indifferent-multistabil ausgelegt ist.

5. Betätigungseinrichtung nach Anspruch 4, **dadurch gekennzeichnet, dass** die Betätigungseinrichtung eine aktuatorisch verstellbare Anschlageinrichtung zur Begrenzung des Drehwinkels des Drehknopfs (1) umfasst.

6. Betätigungseinrichtung nach einem der Ansprüche 1 bis 5, **dadurch gekennzeichnet, dass** das zusätzliche Parksperren-Betätigungselement (4) mittig auf der Stirnseite des Drehknopfs (1) angeordnet ist.

7. Betätigungseinrichtung nach einem der Ansprüche 1 bis 6, **dadurch gekennzeichnet, dass** das zusätzliche Parksperren-Betätigungselement (4) zur aktuatorischen Betätigung einer Feststellbremse eingerichtet ist.

8. Betätigungseinrichtung nach einem der Ansprüche 1 bis 7, **dadurch gekennzeichnet, dass** der Parksperre eine Parksperrenanzeige (3) zugeordnet und in die Ganganzeigeanordnung (2) integriert ist.

9. Betätigungseinrichtung nach einem der Ansprüche 1 bis 8, **dadurch gekennzeichnet, dass** der Drehschalter (1) über die in der Ganganzeigeanordnung (2) festgelegten Gangwahlpositionen hinaus in diskrete Rastpositionen drehbar ist.

10. Betätigungseinrichtung nach Anspruch 1, **dadurch gekennzeichnet, dass** der Drehschalter (1) über eine begrenzte Anzahl von Rastpositionen verfügt und durch Anschläge in seiner Drehbewegung begrenzt ist.

11. Betätigungseinrichtung nach Anspruch 8, **dadurch gekennzeichnet, dass** die Parksperrenanzeige (3) in die Ganganzeigeanordnung (2) zwischen den Positionen "N" und "D" eingefügt ist.

12. Betätigungseinrichtung nach Anspruch 8 oder 11, **dadurch gekennzeichnet, dass** die Parksperrenanzeige (3) die Erreichbarkeit möglicher Gangwahlpositionen anzeigt.

13. Betätigungseinrichtung nach Anspruch 1, **dadurch gekennzeichnet, dass** das Parksperren-Betätigungselement (4) in, an oder auf dem Gangwahlelement (1) angeordnet ist.

## Claims

1. Actuating device for selecting shift stages of a gear-change transmission, having a gear selector element (1) which can be moved between at least two drive stage positions and having a gear display arrangement (2) for displaying the selected drive stage, wherein the gear selector element (1) is a rotary switch, **characterized in that** the actuating device has a parking lock actuating element (4), the position of which can be changed independently of the gear selector element (1), for activating the parking lock independently of the presently engaged transmission drive stage and independently of the rotational angle position of the gear selector element (1), wherein the gear selector element (1), in the event of a change in position thereof when the parking lock is engaged, outputs a shift command for deactivating the parking lock.

2. Actuating device according to Claim 1, **characterized in that** the gear selector element (1) of the actuating device is of defined multistable configuration.

3. Actuating device according to Claim 1, **characterized in that** the gear selector element (1) of the actuating device is of monostable configuration.

4. Actuating device according to Claim 1, **characterized in that** the gear selector element (1) of the actuating device is of indifferent multistable configuration.

5. Actuating device according to Claim 4, **characterized in that** the actuating device comprises a stop device, which can be adjusted by actuator means, for limiting the angle of rotation of the rotary knob (1).

6. Actuating device according to one of Claims 1 to 5, **characterized in that** the additional parking lock actuating element (4) is arranged centrally on the face of the rotary knob (1).

7. Actuating device according to one of Claims 1 to 6, **characterized in that** the additional parking lock actuating element (4) is designed for the operation, by actuator means, of a parking brake.

8. Actuating device according to one of Claims 1 to 7, **characterized in that** the parking lock is assigned a parking lock display (3) and is integrated into the gear display arrangement (2).

9. Actuating device according to one of Claims 1 to 8, **characterized in that** the rotary switch (1) can be rotated beyond the gear selector positions defined in the gear display arrangement (2) into discrete detent positions.

10. Actuating device according to Claim 1, **characterized in that** the rotary switch (1) has a limited number of detent positions and is limited in its rotational movement by stops.

11. Actuating device according to Claim 8, **characterized in that** the parking lock display (3) is included in the gear display arrangement (2) between the positions "N" and "D".

12. Actuating device according to Claim 8 or 11, **characterized in that** the parking lock display (3) displays the availability of possible gear selector positions.

13. Actuating device according to Claim 1, **characterized in that** the parking lock actuating element (4) is arranged in or on the gear selector element (1).

## Revendications

1. Dispositif de commande pour la sélection de rapports de commutation d'une transmission à changement de vitesses comprenant un élément de sélection de vitesse (1) déplaçable entre au moins deux positions de rapports de conduite et un agencement indicateur de vitesse (2) pour indiquer le rapport de conduite sélectionné, l'élément de sélection de vitesse (1) étant un interrupteur tournant, **caractérisé en ce que** le dispositif de commande présente un élément de commande de verrouillage de stationnement (4) de position variable indépendamment de l'élément de sélection de vitesse (1) pour l'activation du verrouillage de stationnement indépendamment du rapport de conduite de la transmission qui vient juste d'être enclenché et indépendamment de la position angulaire de rotation de l'élément de sélection de vitesse (1), l'élément de sélection de vitesse (1), lors de son changement de position, lorsque le verrouillage de stationnement est enclenché, émettant un ordre de commutation pour désactiver le verrouillage de stationnement.

2. Dispositif de commande selon la revendication 1, **caractérisé en ce que** l'élément de sélection de vitesse (1) du dispositif de commande est conçu de manière multistable définie.

3. Dispositif de commande selon la revendication 1, **caractérisé en ce que** l'élément de sélection de vitesse (1) du dispositif de commande est conçu de manière monostable.

4. Dispositif de commande selon la revendication 1, **caractérisé en ce que** l'élément de sélection de vitesse (1) du dispositif de commande est conçu de manière indifféremment multistable.

5. Dispositif de commande selon la revendication 4, **caractérisé en ce que** le dispositif de commande comprend un dispositif de butée réglable par un actionneur pour limiter l'angle de rotation du bouton tournant (1).

6. Dispositif de commande selon l'une quelconque des revendications 1 à 5, **caractérisé en ce que** l'élément de commande de verrouillage de stationnement supplémentaire (4) est disposé centralement sur le côté frontal du bouton tournant (1).

7. Dispositif de commande selon l'une quelconque des revendications 1 à 6, **caractérisé en ce que** l'élément de commande de verrouillage de stationnement supplémentaire (4) est prévu pour la commande par actionneur d'un frein de stationnement.

8. Dispositif de commande selon l'une quelconque des revendications 1 à 7, **caractérisé en ce qu'**un indicateur de verrouillage de stationnement (3) est associé au verrouillage de stationnement et est intégré dans l'agencement indicateur de vitesse (2).

9. Dispositif de commande selon l'une quelconque des revendications 1 à 8, **caractérisé en ce que** l'interrupteur tournant (1) peut tourner au-delà des positions de sélection de vitesse fixées dans l'agencement indicateur de vitesse (2) jusque dans des positions d'encliquetage discrètes.

10. Dispositif de commande selon la revendication 1, **caractérisé en ce que** l'interrupteur tournant (1) dispose d'un nombre limité de positions d'encliquetage et son mouvement de rotation est limité par des butées.

11. Dispositif de commande selon la revendication 8, **caractérisé en ce que** l'indicateur de verrouillage de stationnement (3) est introduit dans l'agencement indicateur de vitesse (2) entre les positions "N" et "D".

12. Dispositif de commande selon la revendication 8 ou 11, **caractérisé en ce que** l'indicateur de verrouillage de stationnement (3) indique la possibilité d'atteindre des positions de sélection de vitesse possibles.

13. Dispositif de commande selon la revendication 1, **caractérisé en ce que** l'élément de commande de verrouillage de stationnement (4) est disposé dans, contre ou sur l'élément de sélection de vitesse (1).
